# EUROPÄISCHE PATENTSCHRIFT

(11) **EP 0 372 279 B1**
(45) Veröffentlichungstag und Bekanntmachung des Hinweises auf die Patenterteilung: **11.08.1993**
(21) Anmeldenummer: 89121358.9
(22) Anmeldetag: 18.11.1989
(51) Int. Cl.: F16K 17/196, F16K 1/30, F16K 31/524

(54) **Ventilanordnung zum Füllen und Entleeren eines Gasbehälters**
Valve arrangement for filling and draining a gas container
Dispositif de soupape pour remplir et vider une bouteille à gaz

(30) Priorität: 06.12.1988 LU 87400
(43) Veröffentlichungstag der Anmeldung: 13.06.1990
(73) Patentinhaber: LUXEMBOURG PATENT COMPANY S.A., 1720 Luxembourg (LU)
(72) Erfinder: Kremer, Paul, L-7242 Walferdange (LU)
(74) Vertreter: Meyers, Ernest

(56) Entgegenhaltungen:
- AT-B- 298 818
- DE-C- 2 909 046

## Beschreibung

Die Erfindung betrifft eine Ventilanordnung zum Füllen und Entleeren eines Gasbehälters, insbesondere eines solchen für hochreine Gase, mit einem Restdruckventil und einer Füllvorrichtung welche zur Durchführung des Füllprozesses am Restdruckventil montiert wird entsprechend den im Oberbegriff von Anspruch 1 aufgeführten Merkmalen.

Es ist bekannt, Gasbehälter für hochreine Gase, wie sie zum Beispiel bei der Herstellung von optischen Fasern oder bei der Herstellung von Halbleitern, insbesondere zum Dotieren letzerer, verwandt werden, mit einem sogennanten Restdruckventil auszurüsten, welches die Aufgabe hat, beim Entleeren des Behälters automatisch zu schliessen, wenn der Behälterdruck einen vorbestimmten Minimalwert, den Restdruck, erreicht hat, welcher über dem Umgebungsdruck liegt. Auf diese Weise wird das Eindringen von Verunreinigungen aus der Umgebungsatmosphäre in den Behälter vermieden.

Zum Wiederauftanken des Gasbehälters muss das genannte Restdruckventil geöffnet werden, was entweder manuell oder auch automatisch durch den Druck des Frischgases realisiert werden kann.

Derartige Anordnungen sind so aufgebaut, dass sie nach Beendigung des Füllvorganges versehentlich offengelassen werden, so dass sich der Behälter bei einer anschliessenden Gasentnahme bis zum Umgebungsdruck mit den sich daraus ergebenen, obengennanten Risiken des Eindringens von Verunreinigungen aus der Umgebungsatmosphäre, entleeren kann.

Bekannt sind auch Füllvorrichtungen, welche bei ihrer Montage am Restdruckventil zwecks Durchführung eines Füllprozesses das Restdruckventil mechanischautomatisch öffnen. Bei ihrer Demontage wird das Restdruckventil unter der Wirkung einer ihm zugeordneten Druckfeder geschlossen (siehe die gattungsgemässe DE-C- 2909046). In einer Variante mit verkürzter Baulänge gemäss Fig. 7 der DE-C-2909046 ist der Ventilkörper mit einer wendelförmigen äusseren Nockenfläche ausgerüstet, die mit einem festen Stift in der Wandung zusammenwirkt. Dadurch wird bei Verdrehung des Ventilkörpers dieser von seinem Sitz abgehoben. Zum Schliessen der Ventilanordnung muss der Ventilkörper jedoch wieder in die entgegengesetzte Richtung gedreht werden.

In der DE-3013102 C2 wird eine Füllvorrichrung beschrieben, welche nach einem pneumatischen Differentialkolbenprinzip arbeitet und auch vollautomatisch arbeitet.

In Weiterbildung der gattungsgemässen Ventilanordnung zum Füllen und Entleeren eines Gasbehälter nach dem Stand der Technik ist es Aufgabe der Erfindung, eine Anordnung vorzuschlagen, bei der zur Durchführung eines Füllprozesses das Restdruckventil mittels der Füllvorrichtung zu öffnen ist und die gewährleistet, dass das Restdruckventil beim Entfernen der Füllvorrichtung automatisch geschlossen wird.

Diese Aufgabe wird durch eine Ventilanordnung zum Füllen und Entleeren eines Gasbehälters der eingangs erwähnten Gattung mit den im Kennzeichen des Hauptanspruchs angeführten Merkmalen gelöst. Weitere Ausgestaltungen befinden sich in den Unteransprüchen.

Ein Ausführungsbeispiel der Erfindung ist in den Zeichnungen, in denen gleiche Teile mit den gleichen Referenzzahlen versehen sind, dargestellt und wird mit folgenden näher beschrieben. Es zeigen:
Figur 1, einen Vollschnitt durch das erfindungsgemässe Restdruckventil in geschlossener Stellung;
Figur 2, eine Ansicht in Richtung A (Figur 1) des in Figur 1 gezeigten Restdruckventils in geschlossener Stellung;
Figur 3, eine Ansicht wie in Figur 2, jedoch mit dem Restdruckventil in geöffneter Stellung;
Figur 4, die Ansicht eines Vollschnittes durch das Restdruckventil und die daran montierte, erfindungsgemässe Füllvorrichtung mit dem Ventil in geschlossener Stellung;
Figur 5, eine Ansicht wie Figur 4, jedoch mit dem Restdruckventil in geöffneter Stellung.

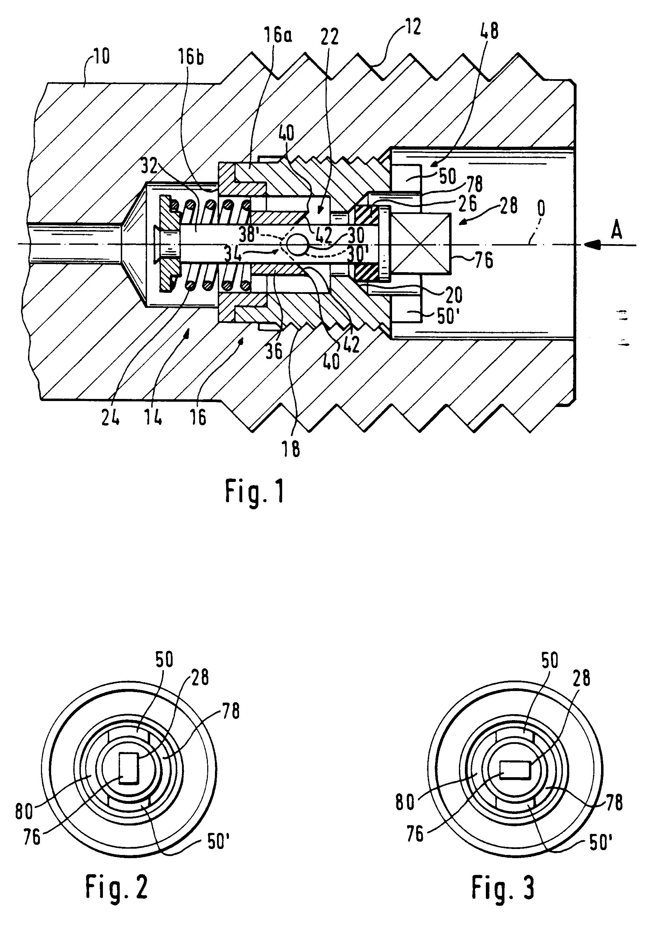

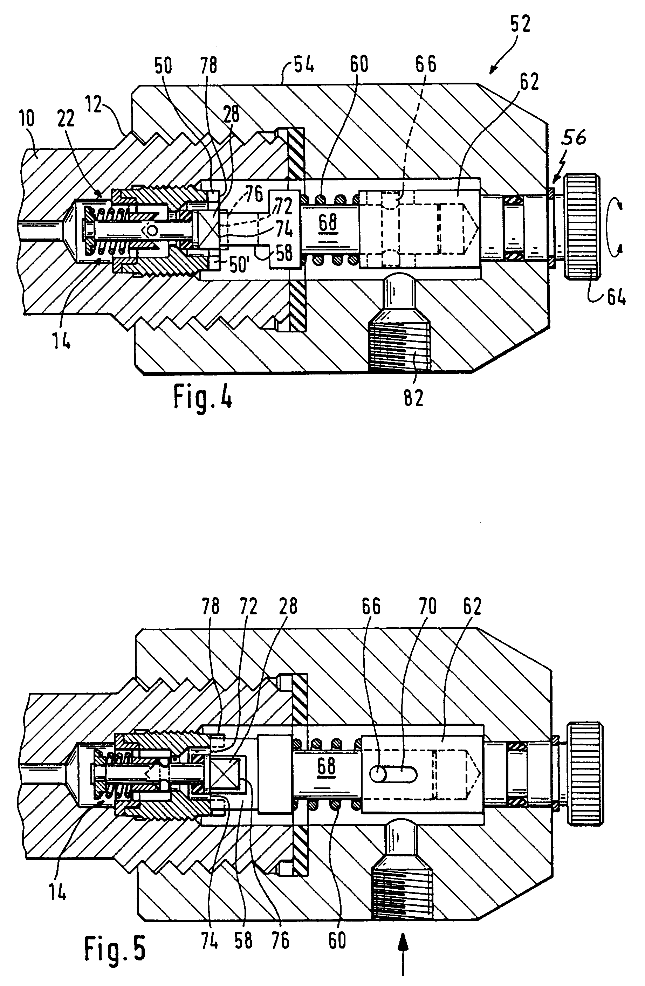

In Figur 1 ist 10 ein einem nicht gezeigten Gasbehälter, zum Beispiel einer Gasflasche, zugeordneter Rohrstutzen mit Aussengewinde 12, auf welches die weiter unten beschriebene, erfindungsgemässe Füllvorrichtung aufgeschraubt wird (siehe Figuren 4 und 5). Innen in diesem Rohrstutzen 10 ist das erfindungsgemässe Restdruckventil 14 dicht eingeschraubt. Dieses Ventil 14 besteht im wesentlichen aus einem Ventilkörper 16, der aus Fertigungs- und Montagegründen hier zweiteilig ausgeführt ist, dem Ventilhauptkörper 16a mit einem Aussengewinde 18 und einem Ventilsitz 20, und dem Führungsteil 16b für ein Schliessteil 22 des Ventils 14. Das Schliessteil 22 wird durch eine Druckfeder 24 unter Zwischenschaltung einer hohlzylinderförmigen Dichtung 26 gegen den Ventilsitz 20 am Ventilhauptkörper 16a gedrückt. Das nach aussen, das heisst in Figur 1 nach rechts zeigende Ende des Schliessteils 22 weist ein Profil auf, welches im dargestellten Beispiel als Aussenvierkant 28 mit rechteckigem Querschnitt (siehe Figuren 2 und 3) ausgeführt ist. An diesem Vierkant kann ein Werkzeug angreifen zum Öffnen des Ventils 14. Wird das Schliessteil 22 mit Hilfe des am Vierkant 28 angreifenden Werkzeugs um seine Längsachse gedreht, so bewegen sich beidseitige radiale Vorsprünge 30, 30′ am Schaft 32 des Schliessteils 22 entlang einer Nockenkonfiguration 34 an einer Gleitbuchse 36 des Führungsteils 16b für den Ventilschaft 32. Diese Nockenkonfiguration 34 besteht im wesentlichen aus beidseitig je einem Nockengrund 38, 38′ (38 wegen des Schnittes nicht sichtbar), Nockenscheiteln 40 und Rampen 42, welche jeweils Nockengrund und Nockenscheitel miteinander verbinden. In der dargestellten Ausführung ist, wie sich aus Figur 1 ergibt, die Projektion der genannten Nockenkonfiguration 34 auf eine zur Ventilachse O senkrechte Ebene kreisringförmig. Bei der genannten Drehung des Vierkants 28 bewegen sich die Vorsprünge 30, 30′ entlang den Rampen 42 aus dem Bereich des Nockengrundes 38 heraus in Richtung auf die Nockenscheitel 40 hin, wodurch sich das Schliessteil 22 gegen den Druck der Feder 24 vom Ventilsitz 20 abhebt und den Weg freigibt für die Zufuhr von Frischgas.

Ein Hauptkennzeichen der Erfindung besteht darin, dass beim Entfernen des (in Figur 1 noch nicht gezeigten) Werkzeugs zur Erzeugung einer Drehbewegung des Vierkantes 28 das Schliessteil 22 durch die Wirkung der Druckfeder 24 wieder in Schliessstellung geht, wodurch auf Grund der obigen Ausführungen gewährleistet ist, dass bei einer anschliessenden Gasentnahme eine solche nur bis zu einem bestimmten Limit, welches durch die Kraft der Druckfeder 24 gegeben ist, vorgenommen werden kann, so dass das Eindringen von Verunreinigungen in die Gasflasche verhindert wird.

Damit beim Aufhören einer Drehmomentausübung auf den Vierkant 28 ein sicheres Zurückgehen des Ventilschliessteils 22 auf den Ventilsitz 20 gewährleistet ist, sieht die Erfindung verschiedene Ausgestaltungsmöglichtkeiten der Nockenkonfiguration 34 in Verbindung mit entsprechenden Drehwinkeln des Vierkantes 28 vor.

Eine erste Möglichkeit besteht darin, dass der Nockengrund 38, 38′ und der Nockenscheitel 40 in einer Projektion auf eine zur Achse O senkrechte Ebene einen Zentriwinkel, dessen Scheitel auf O liegt, von 90° bilden.

Da die Scheitel 40 praktisch spitz zulaufen, kann mit allergrösster Wahrscheinlichkeit davon ausgegangen werden, dass bei einer Drehung des Vierkantes 28 um ebenfalls 90°, wobei also die Vorsprünge 30, 30′ an den Scheiteln 40 anliegen, der Vierkant 28 nach dem Aufhören des auf ihn wirkenden Drehmomentes wieder in die in Figur 1 gezeigte Stellung, das heisst in Schliessstellung des Ventils, zurückgeht, wobei es gleichgültig ist, ob die für diese Schliessbewegung notwendige Vierteldrehung des Schaftes 32, in Blickrichtung A (Figur 1) gesehen, nach rechts oder links erfolgt.

Absolute Sicherheit für ein automatisches Zurückgehen des Vierkants 28 in seine Schliessstellung ist bei den beiden folgenden Möglichkeiten für die Betätigung des Vierkants 28 in Verbindung mit entsprechender Grössenwahl des vorgenannten Zentriwinkels gegeben.

Die zweite Möglichkeit geht von einem Zentriwinkel von ebenfalls 90° aus, jedoch wird dann der Vierkant 28 beim Öffnen des Ventils um einen Winkel kleiner 90° gedreht, so dass die Vorsprünge 30, 30′ in keinem Falle bis zum Scheitelpunkt 40 wandern, womit durch die Wirkung der Druckfeder 24 gewährleistet ist, dass beim Fortfall eines von aussen auf den Vierkant 28 wirkenden Drehmomentes das Schliessteil 22 wieder in seine in Figur 1 gezeigte Schliessstellung zurückgeht.

Die dritte Möglichkeit geht von einem Zentriwinkel von größer 90° aus, jedoch wird dann der Vierkant 28 beim Öffnen des Ventils um einen Winkel gedreht, der kleiner ist als dieser Zentriwinkel von größer 90°, zum Beispiel um genau 90 °. Auch in diesem Falle geht das Schliessteil 22 nach dem Fortfall einer Drehmomentausübung auf den Vierkant 28 mit Sicherheit in seine Schliessstellung zurück.

Bei dieser zweiten und dritten Möglichkeit führt der Schaft 32 bei seiner Schliessbewegung eine durch die gewählte Nockenkonfiguration 34 eindeutig gegebene Drehbewegung aus, das heisst entweder nach rechts oder nach links im Gegensatz zur genannten ersten Möglichkeit, wo die Drehbewegung aleatorisch nach rechts oder links ablaufen kann.

Der Ventilhauptkörper 16a ist an seinem nach aussen zeigenden Ende (in Figur 1 nach rechts zeigend) in Gestalt einer Muffe 48 mit radial durchgestossenen Quernuten 50, 50 ′ ausgeführt. Diese Nuten 50, 50′ haben aus Blickrichtung A (Figur 1) die Form von Kreisringsegmenten (Figuren 2 und 3).

Damit die vorbeschriebenen Bewegungen des erfindungsgemässen Schliessteils 22 in ihren relevanten Phasen im wesentlichen zwangsläufig und automatisch ablaufen, sieht die Erfindung zur Durchführung eines Füllprozesses an der Gasflasche eine Füllvorrichtung vor, welche für die Dauer dieses Füllprozesses dicht auf das Aussengewinde 12 des Rohrstutzens 10 aufgeschraubt wird (Figuren 4 und 5).

Diese Füllvorrichtung 52 weist eine Überwurfmutter 54 auf und ist mit einem drehbaren Betätigungsmechanismus (Öffnungsvorrichtung) 56 für den Vierkant 28 (oder dergleichen) am Schliessteil 22 bestückt, wobei dieser Betätigungsmechanismus 56 mit Hilfe eines Drehknopfes 64, oder dergleichen, geschwenkt werden kann.

An dem dem Restdruckventil 14 zugekehrten Ende ist der Betätigungsmechanismus 56 in Form einer Gabel 58 (siehe Figur 5) ausgeführt, welche mit dem Vierkant 28 zwei verschiedene Eingriffstellungen einnehmen kann, bedingt durch das Verhandensein der Nuten 50, 50′, so wie dies weiter unten erläutert wird.

Die Gabel 58 ist durch eine weitere Druckfeder 60 in Richtung Vierkant 28 und Nuten 50, 50′ vorgespannt, wobei diese Druckfeder 60 sich am axial festen Teil 62 des Betätigungsmechanismus 56 abstützt. Die Gabel 58 ist im Teil 62 axial verschieblich, jedoch mittels eines Querstiftes 66 (oder dergleichen) am Gabelführungsschaft 68 und einem Langloch 70 am axial festen Teil 62 drehfest gelagert.

Beim Aufschrauben der überwurfmutterähnlichen Füllvorrichtung 52 auf das Gewinde 12 des Rohrstutzens 10 zwecks Durchführung eines Füllprozesses zum Wiederauftanken der (nicht gezeigten) Gasflasche mit Frischgas hat die Druckfeder 60 zunächst ihre grösstmögliche durch das Langloch 70 gegebene Länge. In einer bestimmten Phase dieses Aufschraubvorgangs kommen dann die freien (linken) Stirnflächen 72, 74 der Gabel 58 in Berührungskontakt mit der freien (rechten) Stirnseite 76 des Vierkants 28, wodurch die Gabel 58 mit ihrem Führungschaft 68 axial blockiert wird und beim weiteren Einschrauben der Füllvorrichtung 52 die Feder 60 sich zusammendrückt.

Ist die Füllvorrichtung 52 am Stutzen 10 festgezogen, so wird der Drehgriff 64 betätigt bis die Gabel 58 mit dem Vierkant 28 in die in Figur 4 gezeigte erste Phase des Eingriffs kommt, wobei nur das linke Ende der Gabel 58 und das rechte Ende des Vierkantes 28 in Eingriff kommen. Ein gänzliches Hinüberschieben der "Zinken" der Gabel 58 über den Vierkant 28 ist in dieser Stellung noch nicht möglich, da die Stirnflächen 72, 74 der Gabel von den Stirnflächen 78, 80 des Ventilhauptkörpers 16a axial blockiert werden.

Wird jetzt die Gabel 58 von der Stellung gemäss Figur 4 ausgehend durch Betätigung des Drehknopfes 64 um 90° gedreht, so öffnet sich das Restdruckventil 14 durch das Zusammenwirken der Vorsprünge 30, 30′ und der Rampen 42. Die Gabelstirnflächen 72, 74 kommen jetzt gegenüber den Nuten 50, 50′ zu liegen und werden durch die Wirkung der Druckfeder mit diesen Nuten zum Eingriff gebracht ; damit ist die Gabel 58 in dieser Stellung am Ventilhauptkörper 16a festgelegt und das Ventil 14 in geöffneter Stellung blockiert. Nunmehr kann durch den Kanal 82 der Füllvorrichtung Frischgas zugeführt werden.

Ist der Füllprozess beendet, so wird die Füllvorrichtung 52 abgeschraubt, wodurch die Gabel 58 zuerst die Nuten 50, 50′ und gleich anschliessend den Vierkant 28 freigibt, so dass das Restdruckventil 14 sich unter der Wirkung seiner Druckfeder 24 automatisch durch eine simultane Axial- und Drehbewegung seines Schliessteils 22 schliesst.

Beim Aufschrauben der Füllvorrichtung 52 auf den Stutzen 10 kann es zufällig geschehen, dass die in Figur 4 gezeigte relative (Eingriffs-) Stellung zwischen Gabel 58 und Vierkant 28 sich von selbst ergibt. Die Betätigung des Drehknopfes 64 beschränkt sich dann darauf, die Gabel 58 nach dem vollständigen Anziehen der Füllvorrichtung 52 am Stutzen 10 um den genannten Winkel von 90°, dass heisst eine Viertelumdrehung, zu drehen, um die Gabel- und Ventilstellung nach Figur 5 herbeizuführen.

Wenn im vorstehenden von einer 90°- oder Viertelumdrehung des Schliessteils 22 des Ventils 14, beziehungsweise des Vierkants 28 oder der Gabel 58 gesprochen wurde, bezogen diese Angaben sich auf die gezeigten Figuren, welche den Erfindungsgedanken möglichst anschaulich verdeutlichen sollen. Wird ein von 90° abweichender Winkelwert zwischen Nockengrund 34 und Nockenscheitel 40 gewählt (siehe obengenannte dritte Möglichkeit), so müssen die genannten Drehwinkel angepasst werden, wobei, wie aus den weiter obenstehenden Ausführungen hervorgeht, nur zu berücksichtigen ist, dass das Schliessteil 22, nachdem es für die Dauer des Füllprozesses durch das Zusammenwirken der Gabel 58, des Vierkants 28 und der Nut 50, 50′, in Öffnungsstellung blockiert war, sich nach dem Entfernen der Füllvorrichtung 52 automatisch durch die Wirkung der Feder 24 und einer kombinierten Dreh- und Axialbewegung zurück in seine Schliessstellung (Figuren 1, 2 und 3 ) begibt.

Durch die erfindungsgemässe Ventilanordnung ist gewährleistet, dass das Restdruckventil nach der Beendigung eines Füllprozesses und nach dem Entfernen der erfindungsgemässen Füllvorrichtung geschlossen ist. Dieses Ergebnis wird mit einfachen, rein mechanisch wirkenden Mitteln erzielt.

## Patentansprüche

1. Ventilanordnung zum Füllen und Entleeren eines Gasbehälters, insbesondere eines solchen für hochreine Gase, mit einem ein Schliessteil (22) und einen Ventilkörper (16) aufweisenden Restdruckventil (14) und einer auf das Restdruckventil montierbaren Füllvorrichtung (52), wobei das Schliessteil im Ventilkörper axial beweglich ist und von einer zwischen dem Ventilkörper und dem Schliessteil vorgesehenen Druckfeder (24) in Richtung Schliessstellung beaufschlagt ist und unter dem Einfluss der Druckfeder eine stabile Schliessstellung einnimmt, wobei der Ventilkörper und ein Schaft (32) des Schliessteiles eine zusammenwirkende Nockenkonfiguration (34) aufweisen, welche unter Drehung des Schaftes mittels eines manuellen Bedienungsorgans eine axiale Verschiebung des Schaftes in Öffnungsstellung bewirkt, dadurch gekennzeichnet, dass eine Verriegelungsvorrichtung vorgesehen ist, welche das Schliessteil in der Öffnungsstellung so lange hält, bis die Füllvorrichtung vom Restdruckventil entfernt wird, und dass die Nockenkonfiguration eine doppelte Nockenfläche auf einem der beiden Ventilteile des Restdruckventils (Ventilkörper oder Schaft des Schliessteiles) aufweist, wobei die Nockenkonfiguration das Schliessteil nach Entfernen der Füllvorrichtung vom Restdruckventil unter dem Einfluss der Druckfeder selbsttätig in die Schliessstellung gleiten lässt.

2. Ventilanordnung nach Anspruch 1, dadurch gekennzeichnet, dass der Ventilschaft (32) in einer festen rohrförmigen Gleitbuchse (36) des Ventilkörpers geführt ist, dass die Nockenkonfiguration (34) aus einem V - förmigen stirnseitigen Einschnitt in der Gleitbuchse (36) mit einem Nockengrund (38-38'), einem Nockenscheitel (40) und Rampen (42) sowie aus mit beidseits am Ventilschaft (32) vorgesehenen in den Einschnitt eingreifenden radialen Vorsprüngen (30, 30') besteht, so dass in Schliessstellung sich die Vorsprünge (30, 30') unter Wirkung der Druckfeder (24) im Nockengrund (38, 38') befinden und bei Verdrehung des Ventilschaftes (32) über die Rampen (42) in Richtung Nockenscheitel (40) gleiten und eine entsprechende axiale Bewegung des Ventilschaftes (32) in Öffnungsstellung bewirken.

3. Ventilanordnung nach Anspruch 1 und 2, dadurch gekennzeichnet, dass die Füllvorrichtung (52) eine Überwurfmutter (54), welche koaxial zum Restdruckvenil (14) an einem den Gasbehälter zugeordneten Rohrstutzen (10), in welchem das Restdruckventil eingeschraubt ist, aufschraubar ist, und eine drehbare Öffnungsvorrichtung (56) zur Drehung des Ventilschaftes enthält.

4. Ventilanordnung nach Anspruch 3, dadurch gekennzeichnet, dass die Öffnungsvorrichtung (56) aus einem in der Überwurfmutter (54) axial unbeweglichen und mit einem Drehknopf (64) drehbaren ersten Teil (62) und aus einem über eine weitere Druckfeder (60) beaufschlagten zweiten Teil (68) besteht, das mit dem ersten Teil (62) verschieblich jedoch drehfest gekoppelt ist, wobei der zweite Teil zum Restdruckventil hin gabelförmige Enden (58) aufweist, welche mit dem als Vierkant (28)ausgebildeten nach aussen zeigendem Ende des Ventilschaftes (32) unter der Wirkung der weiteren Druckfeder (60) in Eingriff bringbar ist.

5. Ventilanordnung nach Anspruch 4, dadurch gekennzeichnet, dass die Verriegelungsvorrichtung kreisbogenförmige Nuten (50, 50') aufweist, welche an der Stirnseite einer den Ventilkörper (16) im Bereich des Vierkants (28) verlängernden Muffe (48) vorgesehen sind, wobei die Muffe (48) von dem Vierkant (28) axial überragt wird und die gabelförmigen Enden (58) unter Wirkung der weiteren Druckfeder (60) in die Nuten (50, 50') einrastbar sind.

6. Ventilanordnung nach Anspruch 2, dadurch gekennzeichnet, dass der V-förmige Einschnitt der Nockenkonfiguration einen Öffnungswinkel von wenigstens 90° aufweist.

7. Ventilanordnung nach Anspruch 4 oder 5, dadurch gekennzeichnet, dass der Vierkant (28) einen rechteckigen Querschnitt aufweist.

8. Ventilanordnung nach Anspruch 5, dadurch gekennzeichnet, dass die gegenseitige Orientierung des Vierkantes (28) und der Nuten (50, 50') derart ist, dass die Verriegelung durch Einrasten der gabelförmigen Enden in die Nuten (50, 50') erfolgt, wenn die Vorsprünge (30, 30') den Nockenscheitel (40) der Nockenkonfiguration erreicht haben.

9. Ventilanordnung nach Anspruch 5 dadurch gekennzeichnet dass die gegenseitige Orientierung des Vierkantes (28) und der Nuten (50, 50') derart ist, dass die Verriegelung durch Einrasten der gabelförmigen Enden in die Nuten (50, 50') erfolgt, bevor die Vorsprünge (30, 30') den Nockenscheitel (40) der Nockenkonfiguration erreicht haben.

## Claims

1. Valve arrangement for filling and emptying a gas container, in particular a gas container for high-purity gases, having a residual pressure valve (14) which has a closing part (22) and a valve body (16), and having a filling apparatus (52) which can be mounted on the residual pressure valve (14), the closing part being axially movable in the valve body and being acted on in the direction of the closed position by a pressure spring (24) provided between the valve body and the closing part, and assuming under the influence of the pressure spring a stable closed position, the valve body and a stem (32) of the closing part having an interactive cam configuration (34) which, with rotation of the stem by means of a manual control element, brings about an axial displacement of the stem into the open position, characterised in that a locking device is provided which holds the closing part in the open position until the filling apparatus is removed from the residual pressure valve, and in that the cam configuration has a double cam face on one of the two valve parts of the residual pressure valve (valve body or stem of the closing part), the cam configuration allowing the closing part to slide automatically into the closed position under the influence of the pressure spring after the removal of the filling apparatus from the residual pressure valve.

2. Valve arrangement according to Claim 1, characterised in that the valve stem (32) is guided in a fixed tubular sliding bushing (36) of the valve body, in that the cam configuration (34) consists of a V-shaped, end-side indent in the sliding bushing (36) with a cam base (38, 38'), a cam vertex (40) and ramps (42), and consists of radial projections (30, 30') which are provided on both sides of the valve stem (32) and engage in the indent, so that, in the closed position, the projections (30, 30'), are located, under the influence of the pressure spring (24), in the cam base (38, 38') and, when the valve stem (32) is rotated, slide via the ramps (42) in the direction of the cam vertex (40) and bring about a corresponding axial movement of the valve stem (32) into the open position.

3. Valve arrangement according to Claim 1 and 2, characterised in that the filling apparatus (52) contains a union nut (54) which can be screwed up coaxially to the residual pressure valve (14) onto a pipe connection (10) into which the residual pressure valve is screwed, and contains a rotatable opening device (56) for rotating the valve stem.

4. Valve arrangement according to Claim 3, characterised in that the opening device (56) consists of a first part (62) which is axially fixed in the union nut (54) and can be rotated with a turning knob (64), and of a second part (68) acted on by a further pressure spring (60), and coupled to the first part (62) displaceably, but fixed in terms of rotation, the second part having towards the residual pressure valve, fork-shaped ends (58) which can be engaged with the end, which is constructed as a square (28) and points outwards, of the valve stem (32) under the action of the further pressure spring (60).

5. Valve arrangement according to Claim 4, characterised in that the locking device has arcuate grooves (50, 50') which are provided on the end side of the sleeve (48) which extends the valve body (16) in the region of the square (28), the square (28) projecting axially over the sleeve (48) and it being possible to engage the fork-shaped ends (58) into the grooves (50, 50') under the action of the further pressure spring (60).

6. Valve arrangement according to Claim 2, characterised in that the V-shaped indent in the cam configuration has an opening angle of at least 90°.

7. Valve arrangement according to Claim 4 or 5, characterised in that the square (28) has a rectangular cross-section.

8. Valve arrangement according to Claim 5, characterised in that the mutual orientation of the square (28) and of the grooves (50, 50') is such that the locking takes place by means of engagement of the fork-shaped ends in the grooves (50, 50') when the projections (30, 30') have reached the cam vertex (40) of the cam configuration.

9. Valve arrangement according to Claim 5, characterised in that the mutual orientation of the square (28) and of the grooves (50, 50') is such that the locking takes place by engagement of the fork-shaped ends in the grooves (50, 50') before the projections (30, 30') have reached the cam vertex (40) of the cam configuration.

## Revendications

1. Dispositif de soupape pour remplir et vider un réservoir de gaz, notamment pour des gaz à degré de pureté élevé, avec une soupape de pression résiduelle (14) comprenant un organe de fermeture (22) et un corps de soupape (16) et un dispositif de remplissage (52) pouvant être monté sur la soupape de pression résiduelle, dans lequel l'organe de fermeture est axialement mobile dans le corps de soupape et est sollicité en direction de fermeture par un ressort (24) prévu entre le corps de soupape et l'organe de fermeture et occupe sous l'action du ressort une position de fermeture stable, dans lequel le corps de soupape et un arbre (32) de l'organe de fermeture comportent des configurations de came (34) coopérantes qui provoquent, par la rotation de l'arbre au moyen d'un mécanisme de manoeuvre manuel, un déplacement axial de l'arbre vers une position d'ouverture, caractérisé en ce qu'il est prévu un dispositif de verrouillage qui maintient l'organe de fermeture en position d'ouverture jusqu'à ce que le dispositif de remplissage soit enlevé de la soupape de pression résiduelle et que la configuration de came présente une double surface de came sur l'une des deux parties de soupape de la pression résiduelle (corps de soupape ou arbre de l'organe de fermeture) et en ce que la configuration de came permet un glissement automatique de l'organe de fermeture dans la position de fermeture, sous l'influence du ressort, après l'enlèvement du dispositif de remplissage de la soupape de pression résiduelle.

2. Dispositif de soupape selon la revendication 1, caractérisé en ce que l'arbre de soupape (32) est guidé dans une douille tubulaire fixe (36) du corps de soupape, en ce que la configuration de came (34) est constituée d'une découpe frontale en forme de V dans la douille (36) avec un fond de came (38), (38'), une crête de came (40) et des rampes (42) ainsi que de saillies radiales (30),(30') prévues de part et d'autre de l'arbre de soupape (32) et pénétrant dans la découpe, de sorte que, en position de fermeture, les saillies (30), (30') se trouvent , sous l'effet du ressort (24) dans le fond de came (38), (38') et , lors d'une rotation de l'arbre de came (32) glissent le long des rampes (42) en direction de la crête de came (40) et engendrent une translation axiale correspondante de l'arbre de soupape (32) vers la position d'ouverture.

3. Dispositif de soupape selon l'une des revendications 1 ou 2, caractérisé en ce que le dispositif de remplissage comporte un écrou-chapeau (54) qui est conçu pour être vissé coaxialement par rapport à la soupape de pression résiduelle (14) sur une tubulure (10) associée au réservoir de gaz et dans lequel est vissée la soupape de pression résiduelle et un dispositif d'ouverture rotatif pour la rotation de l'arbre de soupape.

4. Dispositif de soupape selon la revendication 3, caractérisé en ce que le dispositif d'ouverture (56) est constitué d'une première partie rotative (62) axialement immobile dans l'écrou-chapeau (52) et pouvant être tournée à l'aide d'un bouton (64) et d'une deuxième partie (68) sollicitée par un autre ressort (60) et qui est accouplée à la première partie avec possibilité de mouvement axial mais sans possibilité de rotation, la dite seconde partie comportant, du côté de la soupape de pression résiduelle, une extrémité en forme de fourche (58) pouvant être engagée sous l'action de cet autre ressort (60) sur l'extrémité extérieure de l'arbre de soupape (32) conçu sous forme de profit tétragone.

5. Dispositif de soupape selon la revendication 4, caractérisé en ce que le dispositif de verrouillage présente des encoches circulaires (50), (50') prévues sur le côté frontal d'un manchon (48) prolongeant le corps de soupape (16) dans la région du profil (28), en ce que le manchon (48) est dépassé axialement par le profil (28) et en ce que l'extrémité fourchue (58) est engageable, sous l'action de l'autre ressort (60) dans les encoches (50), (50').

6. Dispositif de soupape selon la revendication 2, caractérisé en ce que la découpe en forme de V de la configuration de came possède un angle d'ouverture d'au moins 90 degrés.

7. Dispositif de soupape selon l'une des revendications 4 ou 5, caractérisé en ce que le profil tétragone (28) possède une section rectangulaire.

8. Dispositif de soupape selon la revendication 5, caractérisé en ce que l'orientation mutuelle du profil (28) et des encoches (50), (50') est telle que le verrouillage par pénétration de l'extrémité fourchue dans les encoches (50), (50') se produit lorsque les saillies (30), (30') ont atteint la crête de came (40) de la configuration de came.

9. Dispositif de soupape selon la revendication 5, caractérisé en ce que l'orientation mutuelle du profil (28) et des encoches (50), (50') est telle que le verrouillage par pénétration de l'extrémité fourchue dans les encoches (50), (50') se produit avant que les saillies (30), (30') n'aient atteint la crête de came (40) de la configuration de came.
